# EUROPÄISCHE PATENTSCHRIFT

(11) **EP 1 250 847 B1**
(45) Veröffentlichungstag und Bekanntmachung des Hinweises auf die Patenterteilung: **11.05.2005**
(21) Anmeldenummer: 02007889.5
(22) Anmeldetag: 09.04.2002
(51) Int. Cl.: A23G 7/00

(54) **Verfahren und Vorrichtung zum kontinuierlichen Bereitstellen von längs und quer geschnittenen Süsswarenstücken**
Method and apparatus for the continuous provision of confectionery pieces cut for length and breadth
Procédé et appareil pour fabriquer des morceaux de confiserie coupés en travers et en longueur

(30) Priorität: 19.04.2001 DE 10119077
(43) Veröffentlichungstag der Anmeldung: 23.10.2002
(73) Patentinhaber: Sollich KG, 32105 Bad Salzuflen (DE)
(72) Erfinder: Ridderbusch, Gerhard, 32105 Bad Salzuflen (DE)
(74) Vertreter: Rehberg Hüppe + Partner

(56) Entgegenhaltungen:
- DE-A- 3 128 109
- US-A- 968 110
- US-A- 1 397 198
- US-A- 2 756 459
- US-A- 4 138 768
- US-A- 4 192 899
- US-A- 4 195 489
- US-A- 4 626 439
- US-A- 5 037 350
- H. RÖMPP ET AL.: "Römpps chemie-lexikon" 1975 , FRANCKH'SCHE VERLAGSHANDLUNG , STUTTGART XP002205550 "unter Süsswaren"
- PATENT ABSTRACTS OF JAPAN vol. 011, no. 018 (C-398), 17. Januar 1987 (1987-01-17) -& JP 61 195650 A (ABEKOU SEIKA KK), 29. August 1986 (1986-08-29)
- DATABASE WPI Section Ch, Week 198609 Derwent Publications Ltd., London, GB; Class D14, AN 1986-060821 XP002205551 & SU 1 172 521 A (MOLD FOOD IND DES), 15. August 1985 (1985-08-15)

## Beschreibung

Die Erfindung betrifft ein Verfahren zum kontinuierlichen Bereitstellen von längs und quer geschnittenen Süßwarenstücken, indem aus Rohstoffen mittels eines Mischers eine Süßwarenmasse gemischt, aus der Süßwarenmasse auf einem endlosen Förderer ein überbreites Süßwarenband ausgeformt, das Süßwarenband durch einen Kühlkanal gefördert und unter Entstehung von Randstreifen längs und quer geschnitten wird, wobei die Randstreifen in den Mischer zurückgefördert und in die Süßwarenmasse eingemischt werden. Es wird auch eine Vorrichtung zum kontinuierlichen Bereitstellen von längs und quer geschnittenen Süßwarenstücken, mit einem Mischer zum Mischen einer Süßwarenmasse aus Rohstoffen, mit einer Station zum Ausformen eines überbreiten Süßwarenbandes aus der Süßwarenmasse, mit einem endlosen Förderer zur Aufnahme des ausgeformten Süßwarenbandes, mit einem Kühlkanal, mit einem Längsschneider und einem Querschneider zum Zerteilen des Süßwarenbandes unter Entstehung von Randstreifen, und mit einer Fördereinrichtung zum Zurückfördern der Randstreifen in den Mischer aufgezeigt. Handelsübliche Süßwarenriegel weisen eine Einlage auf, welche oft von allen Seiten mit Schokolade umhüllt ist. Die Einlage kann aus einer oder mehreren Schichten bestehen. Die Einlage eines solchen Süßwarenriegels besteht aus einem Süßwarenstück aus Süßwarenmasse. Die Süßwarenmasse weist verschiedene Rohstoffe auf. Sie kann z. B. Schaumnougat, Karamel, Fudge, Kokosmasse etc. enthalten. Das die Einlage bildende Süßwarenstück kann aus einer Lage, aber auch aus mehr Lagen bestehen, wobei die einzelnen Schichten übereinander liegen. Die aus den entsprechend aufbereiteten Rohstoffen hergestellte Süßwarenmasse wird am Anfang einer solchen Anlage zu einem Süßwarenband oder einem so genannten Teppich ausgeformt, der eine im wesentlichen über die Arbeitsbreite reichende gleichmäßige Schichtdicke besitzt. Es werden eine Mehrzahl Süßwarenstücke nebeneinander hergestellt, indem das Süßwarenband längs und quer aufgeschnitten, also in die Süßwarenstücke unterteilt wird. Die auszuformenden Süßwarenmassen weisen je nach der Art der Masse eine Verarbeitungstemperatur von 40 bis 100 °C auf und sind flüssig bis hochviskos. Das ausgeformte Süßwarenband wird mit Überbreite erzeugt, da die Banddicke entlang der beiden Längsränder in der Regel etwas geringer ist als die vorgesehene Dicke der Süßwarenstücke. Durch das Längsschneiden entstehen auf diese Art und Weise Randstreifen an dem Süßwarenband, die an Ort und Stelle aufgefangen, satzweise zurückgefördert und chargenweise in die Süßwarenmasse wieder eingearbeitet werden. Das ausgeformte Süßwarenband wird vor dem Längs- und Querschneiden durch einen Kühlkanal hindurchgeführt, in welchem es auf eine Kerntemperatur von in der Regel 20 bis 25 °C abgekühlt wird. Dies ist erforderlich, um dem zu zerteilenden Süßwarenband die für das anschließende Schneiden erforderliche Festigkeit zu geben und die Klebrigkeit, welche bei höheren Temperaturen üblicherweise gegeben ist, zu reduzieren.

Ein Verfahren und eine Vorrichtung der eingangs beschriebenen Art sind bekannt. Die beim Längsschneiden entstehenden beiden Randstreifen werden dabei satzweise in Behältern aufgefangen und abgelagert. Vor der Weiterverarbeitung wird der Behälter mit den aufgefangenen Randstreifen in eine Wärmekammer eingebracht und dort erwärmt. Die erwärmten Randstreifen werden dann satzweise in den Mischer eingegeben und somit satzweise in die Süßwarenmasse wieder eingemischt. Zwischen dem satzweisen Einbringen der Randstreifen aus verschiedenen Behältern ergeben sich Zeiten, in denen keine Randstreifen im den Mischer eingebracht werden, sodaß in diesen Zeiten nur Süßwarenmasse aus neuen Rohstoffen auf dem endlosen Förderer zu einem überbreiten Süßwarenband ausgeformt. werden. Bereits dadurch entstehen gewisse Ungleichmäßigkeiten in dem ausgeformten Süßwarenband. Weiterhin bestehen Unterschiede in der Temperatur der satzweise aufgeheizten Randstreifen und zu der Temperatur der Süßwarenmasse aus neuen Rohstoffe. Weiterhin ist die aus den Rohstoffen frisch gemischte Süßwarenmasse bei vergleichsweise hoher Temperatur gut fließfähig, während die zurückgeführten Randstreifen mehr oder weniger erwärmt oder noch vergleichsweise kalt sind und so in festen Strängen bzw. Strangabschnitten in den Mischer gelangen können. Die Randstreifen weisen in der Regel eine deutlich andere Konsistenz auf als die frisch gemischte Süßwarenmasse und lassen sich insoweit nicht homogen in der frisch gemischten Süßwarenmasse verteilen. Im fertigen Produkt, also insbesondere im Süßwarenriegel, sind somit Inhomogenitäten optisch zu erkennen, die als störend empfunden werden. Das aufgezeigte Problem tritt besonders deutlich hervor, wenn es sich um Randstreifen aus einem mehrlagig aufgebauten Süßwarenband handelt und/oder das Süßwarenband relativ hoch gestaltet ist. Oft weisen die verschiedenen Schichten des Süßwarenbandes auch eine untereinander unterschiedliche Farbe und Konsistenz auf, insbesondere dann, wenn sie aus unterschiedlichen Rohstoffen zusammengemischt sind. Da die Randstreifen bei dem bekannten Verfahren ausschließlich in die Frischmasse der untersten Schicht des Süßwarenbandes eingemischt werden, werden diese Inhomogenitäten bei unterschiedlichen Massen am fertigen Produkt noch deutlicher sichtbar.

Außerdem werden häufig aufgeschlagene Massen mit einem sehr geringen spezifischen Gewicht zu einer Einlage bzw. einem Süßwarenband ausgeformt, z. B. aus Schaumnougat. Wenn einer solchen aufgeschlagenen Masse die vergleichsweise kühlen und eine feste Konsistenz aufweisenden Randstreifen zugemischt werden, kann dies die Schaumstruktur im Mischer teilweise zerstören und das spezifische Gewicht der Frischmasse ungewollt nachteilig verändern.

Die US-A-4,138,768 zeigt eine Maschine zur Herstellung gefrorener Scheiben aus gemahlenem Fleisch. Das in zwei Stufen aufgemahlene Fleischmaterial wird auf dem Umfang einer Kühlwalze gekühlt und zu einem Teppich ausgeformt, dessen Breite auf ein Vielfaches des Durchmessers der Fleischscheiben abgestimmt ist. Beim Ausstanzen der kreisrunden Fleischscheiben entstehen Zwickelstücke aus gefrorenem Fleischmaterial, die zurückgefördert, gemischt, aufgemahlen und mit frisch aufgemahlener Masse zusammengefügt werden. Für die Rückführung der Zwickelstücke ist ein weiterer Förderer vorgesehen, wobei es offen bleibt, ob die Rückförderung kontinuierlich oder diskontinuierlich durchgeführt wird. Die Zwickelstücke, die tiefgefroren sind, werden der frischen Masse unter Nutzung eines Kühleffektes zugegeben.

Der Erfindung liegt die Aufgabe zugrunde, ein Verfahren der eingangs beschriebenen Art und eine dafür geeignete Vorrichtung zur Durchführung des Verfahrens bereitzustellen, mit denen die Randstreifen in den Mischer zurückgefördert und in die Süßwarenmasse eingemischt werden können, ohne daß es zu Inhomogenitäten in dem ausgeformten Süßwarenband kommt und/oder empfindliche Massen durch das Einführen der Randstreifen geschädigt werden.

Erfindungsgemäß wird dies bei einem Verfahren der eingangs beschriebenen Art dadurch erreicht, daß die Randstreifen kontinuierlich in den Mischer zurückgefördert und auch kontinuierlich in die Süßwarenmasse eingemischt werden, und daß die Randstreifen vor der Einmischung in die Süßwarenmasse kontinuierlich aufgeheizt werden.

Die Erfindung geht von dem Gedanken aus, die Randstreifen nach dem Längsschneiden des Süßwarenbandes kontinuierlich fortlaufend abzunehmen und kontinuierlich in den Mischer zurückzufördern. Auch die Einmischung in die Süßwarenmasse erfolgt kontinuierlich. Die Randstreifen werden vor der Einmischung in die Süßwarenmasse kontinuierlich aufgeheizt. Die während des kontinuierlichen Rücktransportes mehr oder weniger erkalteten Randstreifen werden vor der Überführung in den Mischer und damit der Wiederhinzufügung zu der Süßwarenmasse aufgeheizt. Dadurch wird die Viskosität erniedrigt. Die Masse der Randstreifen wird so plastifiziert. Auch wenn die kontinuierlich zurückgeförderten Randstreifen nicht genau auf die Temperatur der Süßwarenmasse aus neuen Rohstoffen aufgeheizt werden, wirkt sich dies nicht nachteilig aus, weil durch die kontinuierliche Zugabe in den Mischer wiederum eine Vergleichmäßigung erfolgt. Die rückgeführten Randstreifen können auch auf eine höhere Temperatur als die Temperatur der Süßwarenmasse aus neuen Rohstoffen aufgeheizt werden. Dies erleichtert das homogene Untermischen im Mischer.

Es ist sinnvoll, wenn die erwärmten und plastifizierten Randstreifen vor der Einmischung in die Süßwarenmasse kontinuierlich vorgemischt werden, d. h. aus den in der Regel zwei Randstreifen wird eine Masse durch Mischen erzeugt, die dann dem bisher bereits bekannten Mischer zugeführt und dort mit der frischen Süßwarenmasse vermischt wird. Das Vormischen geschieht mit angetriebenen Mischwerkzeugen. Der Mantel dieses Vormischers kann doppelwandig ausgeführt sein, um so die Randstreifen gleichzeitig auf die erforderliche Temperatur zu bringen und eine nennenswerte nicht gewollte Abkühlung der frischen Süßwarenmasse durch das Zumischen der aus den Randstreifen gebildeten Masse zu vermeiden. Gleichzeitig sorgen die Mischwerkzeuge dafür, daß die aus den Randstreifen gebildete Masse eine gleichmäßige Konsistenz, ein gleichmäßiges Aussehen und eine gleichmäßige Temperaturverteilung erhalten. Besonders wichtig ist dies dann, wenn die Randstreifen von einem mehrlagigen Süßwarenband geschnitten worden sind.

Insbesondere ist es sinnvoll, wenn die Randstreifen möglichst genau auf die Temperatur der aus Rohstoffen gemischten Süßwarenmasse aufgeheizt werden. Damit tritt der Vorteil ein, daß die frisch aus den Rohstoffen hergestellte Süßwarenmasse und die in Form der Randstreifen zurückgeführte Süßwarenmasse zumindest etwa gleiche Konsistenz, Aussehen und Verarbeitungseigenschaften aufweisen. Die Verbindung der beiden Massen ist problemlos. Im fertigen hergestellten Produkt sind keine Inhomogenitäten erkennbar.

Weiterhin besteht die Möglichkeit, daß mindestens ein Rohstoff mit den zurückgeförderten Randstreifen vorgemischt wird. Der Vormischer wird also dazu genutzt, um nicht nur die zurückgeförderten Randstreifen vorzumischen, sondern auch eine Mischwirkung an einem oder mehreren der Rohstoffe herbeizuführen. Dabei kann es sich um solche Rohstoffe handeln, die für ihre homogene Verteilung und Ausformung einen höheren Mischungsgrad, z. B. eine höhere Durchknetung, erfordern als die übrigen Rohstoffe. Es kann sich auch um einen vergleichsweise schwierig einzumischenden Rohstoff handeln, der durch die Vormischung zunächst in einem vergleichsweise kleinen Volumen, nämlich dem der Randstreifen, verteilt wird und sich so dann mit dem Mischer besser mit den restlichen Rohstoffen vermischen läßt. Durch diese Art Vormischung wird auch der Mischer entlastet und im Mischer kann z. B. auf empfindliche aufgeschlagene Rohstoffe Rücksicht genommen werden, die nur eine vergleichsweise kurze Mischzeit vertragen.

Bei einer zur Durchführung des Verfahrens geeigneten Vorrichtung ist erfindungsgemäß vorgesehen, daß die Fördereinrichtung zum kontinuierlichen Zurückfördern der Randstreifen in den Mischer ausgebildet ist, und daß eine Aufheizeinrichtung zum kontinuierlichen Aufheizen der Randstreifen vor der Einmischung in die Süßwarenmasse vorgesehen ist.

Insbesondere ist es vorteilhaft, wenn vor dem Mischer ein Vormischer für die Randstreifen vor deren Einmischung in die Süßwarenmasse vorgesehen ist, der zum Aufheizen und Plastifizieren der zurückgeführten Randstreifen ausgebildet ist. Damit wird eine Vorrichtung bzw. Anlage geschaffen, bei der dem ohnehin bekannten Mischer ein Vormischer vorgeschaltet ist. Dieser Vormischer besitzt Mischwerkzeuge, um die sich aus den Randstreifen ergebende Masse zu durchmischen und in einen Zustand zu versetzen, in dem sie in dem sich anschließenden Mischer leichter mit den übrigen Rohstoffen vermischt werden kann. Dies gilt insbesondere dann, wenn ein mehrlagiger Randstreifen zurückgeführt wird, bei welchem sich die Massen der einzelnen Einlagen unterscheiden. Hier wird eine Art Vormischung durchgeführt und eine insoweit dann auch wieder homogene Masse dem Mischer zugeführt. Der Vormischer ist so ausgebildet, daß er zum Aufheizen und damit Plastifizieren der zurückgeführten Streifen geeignet ist. Dies kann in einfacher Weise dadurch geschehen, daß das Gehäuse des Vormischers doppelwandig ausgebildet wird und an einen entsprechenden Heizkreislauf angeschlossen ist.

Besonders sinnvoll ist es, wenn der Vormischer in der Fördereinrichtung angeordnet und dem Mischer unmittelbar vorgeschaltet ist. Der Vormischer ist damit auch Bestandteil der Fördereinrichtung und in der Nähe des Mischers angeordnet. Er kann zugleich die Funktion eines Querförderers übernehmen, also eine Förderwirkung entfalten, die quer zur Förderrichtung des endlosen Förderers gerichtet ist.

Die Fördereinrichtung kann kontinuierlich angetriebene Förderbänder aufweisen, die ansteigend zu einer Abwurfstelle über dem Vormischer geführt sind. In der Regel ist es lediglich erforderlich, ein Längsförderband an einer Seite der Maschine bzw. Anlage vorzusehen und den anderen Längsstreifen mit Hilfe eines Querförderers im Bereich des Längsschneiders zu übernehmen, so daß letztendlich der eine Längsförderer die beiden Randstreifen zurückfördert. Zweckmäßig ist es hier, den Längsförderer in dieser Rückwärtsrichtung ansteigend auszubilden und anzuordnen, damit die Randstreifen eine Höhe gewinnen, aus der heraus der Abwurf in einen Trichter des Vormischers problemlos möglich ist.

Weiterhin ist es möglich, daß der Vormischer einen Anschluß zum Einbringen mindestens eines Rohstoffes der Süßwarenmasse aufweist. Der Vormischer kann auch mehrere Anschlüsse zum Einbringen unterschiedlicher Rohstoffe in die Süßwarenmasse aufweisen. Der oder die Anschlüsse können über die Länge des Vormischers verteilt angeordnet sein, wie es der jeweilige Rohstoff erfordert. Auf diese Weise ist es möglich, die Länge des Mischers zu verkürzen und solche Rohstoffe, die relativ lang gemischt werden müssen, in den Vormischer einzubringen. Im Vormischer wird eine Vormischung geschaffen, die sich auch insofern vorteilhaft auswirkt, als der eingeführte Rohstoff in Verbindung mit der Masse der Randstreifen bereits eine Vormischung bzw. ein Vorgemenge bildet.

Grundsätzlich gibt es für die Ausbildung des Vormischers und des Mischers im Einzelnen verschiedene Möglichkeiten. Eine sinnvolle Möglichkeit besteht darin, daß der Vormischer und der Mischer zu einer integrierten Einheit zusammengefasst sind. Vormischer und Mischer bilden ein gemeinsames Gerät. Sie können ein gemeinsames Gehäuse aufweisen oder aber zumindest aneinander angeflanschte Gehäuseteile. Es ist sogar möglich, die Mischwerkzeuge des Mischers und des Vormischers auf eine gemeinsame angetriebene Welle zu setzen und gemeinsam durch einen einzigen Motor anzutreiben. Damit sind die Mischwirkungen im Vormischer und im Mischer ein für alle Mal relativ zueinander festgelegt und es können beim Einsatz keine Fehlbedienungen erfolgen. Andererseits ist es aber auch möglich, daß der Vormischer und der Mischer als getrennt regelbare Aggregate ausgebildet sind. Diese Ausführungsform ermöglicht eine größere Variationsbreite der Aufbereitung verschiedener Süßwarenmassen und des Ausformens des Süßwarenbandes. Mit getrennt regelbaren Aggregaten kann eine bessere Anpassung an die unterschiedlichen Erfordernisse verschiedener Produkte erzielt werden. Insbesondere ist es auf diese Art und Weise möglich, getrennt wählbare Drehzahlen im Vormischer und im Mischer einzustellen.

Wenn der Vormischer quer zur Förderrichtung des endlosen Förderers angeordnet und dem Mischer unmittelbar vorgeschaltet ist, erfüllt der Vormischer zugleich die Funktion eines Querförderers im Bereich des Mischers. Der Mischer kann dabei vorteilhaft in Längsrichtung der Vorrichtung, also in der Förderrichtung des Endlosförderers, ausgerichtet angeordnet werden und der Vormischer überbrückt die Strecke zwischen dem einen Seitenrand der Vorrichtung und dem Mischer. Auf diese Weise wird ein gesonderter Querförderer vermieden.

Die Erfindung wird anhand eines bevorzugten Ausführungsbeispiels weiter erläutert und beschrieben. Es zeigen:
- Fig. 1: eine Seitenansicht einer ersten Ausführungsform der Vorrichtung,
- Fig. 2: eine Draufsicht auf die Vorrichtung gemäß Fig. 1,
- Fig. 3: eine Seitenansicht der beiden Endbereiche der Vorrichtung gemäß Fig. 1 in vergrößernder Darstellung, und
- Fig. 4: eine Draufsicht auf die beiden Endbereiche der Vorrichtung gemäß Fig. 2 in vergrößernder Darstellung.

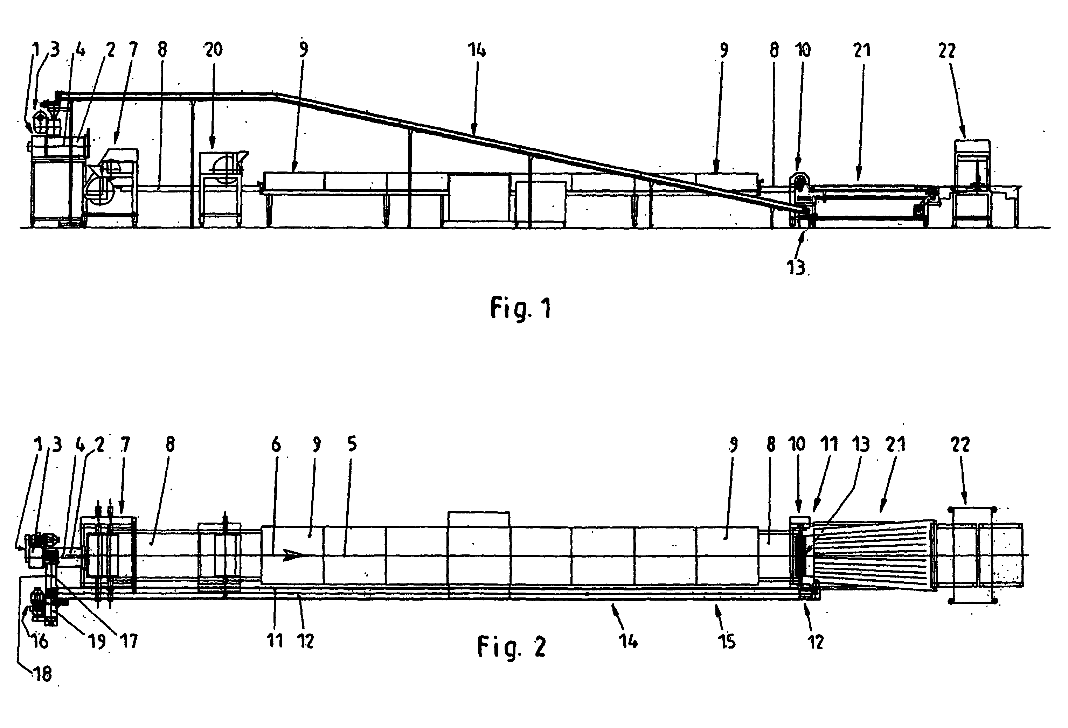

In den Fig. 1 und 2 sind die wesentlichen Elemente der Vorrichtung schematisch wiedergegeben. Am Beginn der Vorrichtung bzw. am Eingang der Anlage befindet sich ein Mischer 1 mit einem Gehäuse 2 und einem Einwurftrichter 3 zum Einbringen verschiedener Rohstoffe in den Mischer 1. Statt oder zusätzlich zu dem Einwurftrichter 3 können auch Anschlüsse für Rohrleitungen vorgesehen sein, durch die flüssige Rohstoffe dem Mischer 1 zugeleitet werden. Das Gehäuse 2 des Mischers 1 weist eine Längsachse 4 auf, die in oder parallel zu einer Mittelachse 5 der gesamten Vorrichtung angeordnet ist. Die Förderrichtung der Süßwarenmasse durch die gesamte Vorrichtung ist durch einen Pfeil 6 verdeutlicht. Die Süßwarenmasse wird also gemäß Pfeil 6 durch die Vorrichtung geführt. Es ist erkennbar, daß der Mischer 1 ausgerichtet zu der Mittelachse 5 und diesbezüglich etwa mittig zu den Seitenrändern der Vorrichtung in Längsrichtung ausgerichtet angeordnet ist. Der Mischer 1 kann heizbar ausgebildet sein. In der Regel ist dem Mischer 1 jedoch eine die Eigenschaften der verschiedenen Rohstoffe berücksichtigende Aufbereitungseinrichtung einschließlich einer Aufheizung und Dosierung vorgeschaltet, die aber aus Gründen der Übersichtlichkeit nicht dargestellt sind. Die zusammengemischten Rohstoffe gelangen in gemischter plastifizierter Form als erwärmte viskose Masse aus dem Mischer 1 in eine Station 7 zum Ausformen eines Süßwarenbandes, welches aus Übersichtlichkeitsgründen nicht dargestellt ist. Das Süßwarenband erstreckt sich über die vorgesehene Arbeitsbreite, umfaßt also in der Regel ein Vielfaches der Summe der Breiten der letztlich hergestellten Süßwarenmassestücke, die beispielsweise als Einlagen bei der Riegelherstellung eingesetzt werden. Das Süßwarenband wird jedoch mit einer Überbreite von der Station 7 erzeugt und auf einem endlosen Förderer 8 abgelegt. Der endlose Förderer 8 fördert das Süßwarenband in Richtung des Pfeils 6 (Fig. 2) durch die Vorrichtung bzw. Anlage. Das Süßwarenband kann eine Dicke in der Größenordnung von vielleicht 5 mm aufweisen. Auch größere Schichtdicken sind denkbar, insbesondere dann, wenn die Süßwarenmasse feste Beimengungen, wie z. B. gehackte Nüsse, enthält. Sofern das Süßwarenband als eine Schicht die Einlage des herzustellenden Produktes bildet, wird es mit Hilfe des endlosen Förderers 8 einem Kühltunnel 9 zugeleitet und durch diesen hindurchgeführt, wobei sich die Temperatur des Süßwarenbandes auf eine Kerntemperatur von in der Regel 20 bis 25 °C erniedrigt, so daß das Süßwarenband eine für das anschließende Schneiden erforderliche Festigkeit und Konsistenz erhält. Gleichzeitig wird die Klebrigkeit des Süßwarenbandes, welche bei den eingangs herrschenden höheren Temperaturen üblicherweise gegeben ist, damit reduziert. Am Ausgang des Kühltunnels 9 wird das Süßwarenband mit Hilfe des Endes des endlosen Förderers 8 einem Längsschneider 10 zugeführt. Mit Hilfe dieses Längsschneiders 10, der drehbare oder feststehende Messer aufweisen kann, wird das Süßwarenband in Längsrichtung geschnitten und es entstehen endlose Streifen aus Süßwarenmasse mit einer übereinstimmenden gewünschten Breite der Süßwarenstücke. Gleichzeitig entstehen zu beiden Seiten des Längsschneiders Randstreifen 11 und 12 aus den Randbereichen des Süßwarenbandes. Die Masse dieser Randstreifen 11 und 12 entspricht etwa 2 bis 5 % der gesamten Masse des Massedurchsatzes durch die Vorrichtung. Die Randstreifen 11 und 12 stellen einen wertvollen Rohstoff dar, der kontinuierlich zurückgeführt und in den Herstellungsprozeß wieder einbezogen wird. Zu diesem Zweck ist unterhalb des Längsschneiders 10 ein Querförderer 13 angeordnet, der den Randstreifen 11 auch auf die andere Seite der Vorrichtung transportiert und damit einem Längsförderer 14 zuleitet. Der Querförderer 13 und der Längsförderer 14 sind Bestandteil einer Fördereinrichtung 15 zum kontinuierlichen Zurückfördern der Randstreifen 11 und 12. Insbesondere aus Fig. 1 ist erkennbar, daß der Längsförderer 14 entgegen der Förderrichtung gemäß Pfeil 6 ansteigend ausgebildet und angeordnet ist. Auf diese Weise werden die Randstreifen 11 und 12 zu dem Anfang der Vorrichtung kontinuierlich zurückgefördert. Dort ist dem Mischer 1 ein Vormischer 16 vorgeschaltet. Der Vormischer 16 weist ein Gehäuse 17 auf, dessen Achse 18 quer zur Förderrichtung gemäß Pfeil 6 angeordnet ist und oberhalb des Einwurftrichters 3 des Mischers 1 endet. Der Vormischer 16 weist einen Trichter 19 auf, über den die Randstreifen 11 und 12 kontinuierlich in den Vormischer 16 eingebracht werden. Auch der Vormischer 16 ist mit Mischwerkzeugen ausgerüstet, die auf einer über einen Motor angetriebenen Welle angeordnet sind. Das Gehäuse 17 des Vormischers 16 ist doppelwandig ausgebildet und an einen Heizkreislauf angeschlossen. Auf diese Art und Weise wird erreicht, daß die Randstreifen 11 und 12, die beim Durchlauf des Süßwarenbandes durch den Kühlkanal 9 abgekühlt wurden, wieder aufgeheizt, mit den Mischwerkzeugen des Vormischers 16 homogen durchmischt und plastifiziert werden, so daß aus den Randstreifen 11 und 12 eine im Mischer 1 leicht untermischbare Masse gebildet wird. Es wird eine Vormischmasse erzeugt, die dem Mischer 1 unmittelbar zugeleitet werden kann. Die Temperatur der Vormischmasse wird vorzugsweise so eingestellt, daß sie der Temperatur der frischen Süßwarenmasse aus den Rohstoffen entspricht, die im Mischer 1 erzeugt wird. Wenn der Vormischer 16, wie insbesondere aus Fig. 2 erkennbar, quer zur Förderrichtung gemäß Pfeil 6 mit seiner Achse 18 ausgerichtet angeordnet wird, erfüllt der Vormischer 16 zugleich eine Querförderfunktion etwa über die halbe Arbeitsbreite der Süßwarenbahn.

Entsprechendes gilt, wenn zusätzlich zu der Station 7 zur Bildung einer ersten Schicht der Süßwarenbahn noch eine zweite Station 20 der ersten Station 7 nachgeschaltet ist. Mit der Station 20 wird eine zweite Lage erzeugt, die ebenfalls über die Arbeitsbreite reicht. Diese zweite Lage wird auf die erste Lage auf dem endlosen Förderer 8 abgelegt, so daß damit ein zweilagiger Bandstreifen entsteht, dessen beide Lagen gemeinsam in dem Längsschneider 10 aufgeschnitten werden. Es versteht sich, daß damit auch die Randstreifen 11 und 12 aus zwei Lagen Süßwarenmasse bestehen, die sich in der Regel in ihrer Konsistenz, Beschaffenheit und auch in ihren Rohstoffen unterscheiden können. Diese beiden Massen werden im Vormischer 16 zu einer homogenen vorgemischten Masse plastifiziert und durchgeknetet. Durch die kontinuierliche Einarbeitung im Mischer 1 gelangen diese beiden Massen in die unterste Schicht des Süßwarenbandes. Durch die kontinuierliche homogene Verteilung sind Inhomogenitäten am fertigen Produkt nicht mehr vorhanden und damit auch nicht erkennbar.

Entsprechendes gilt für den Fall, daß das Süßwarenband auch aus mehr als zwei Schichten aufgebaut wird.

Hinter dem Längsschneider 10 ist ein Spreiztisch 21 angeordnet, mit dem die Längsstreifen aus dem geschnittenen Süßwarenband auf gegenseitigen Abstand gebracht werden. Die Streifen besitzen über ihren jeweiligen Querschnitt konstante Höhe und konstantes Aussehen. Am fertigen Produkt ist nicht mehr erkennbar, ob die betreffende Einlage aus der Mitte des Süßwarenbandes oder im Bereich der Randstreifen 11 und 12 geschnitten wurde. Die Längsstreifen werden dann in einem nachgeschalteten Querschneider 22 entsprechend der gewünschten Länge der Einlage für die Produktstücke unterteilt und weiterverarbeitet, beispielsweise einer Überziehmaschine zugeführt, in der die Einlage allseitig mit Schokolademasse überzogen wird.

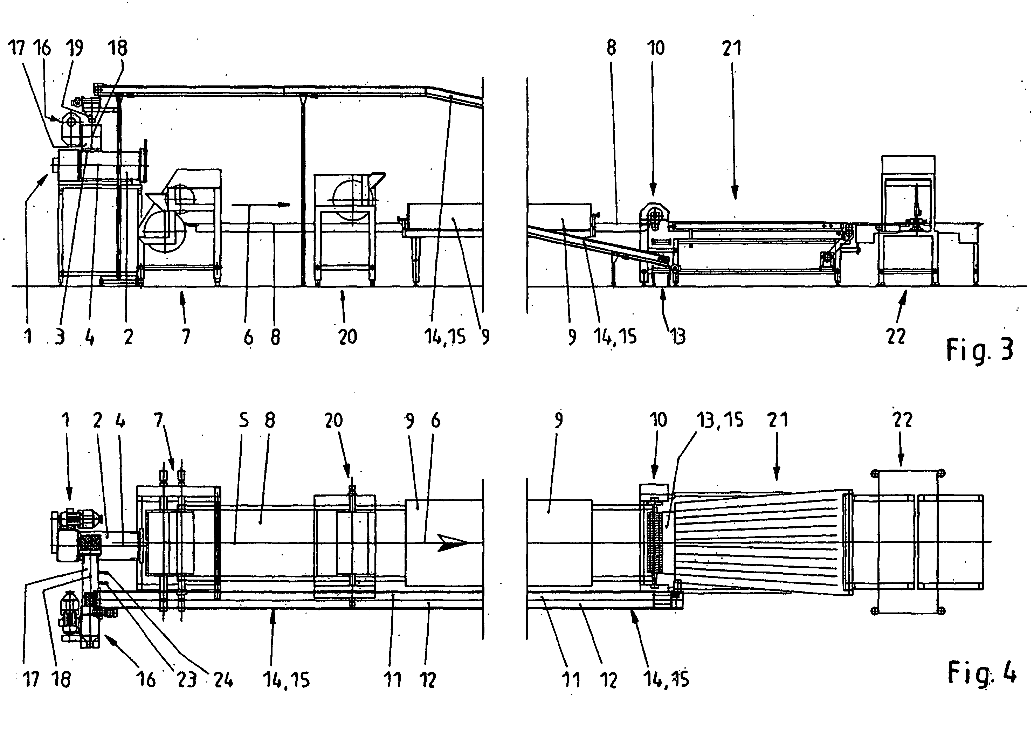

In den Fig. 3 und 4 sind nochmals die Eingangs- und die Endbereiche der Vorrichtung in vergrößernder Darstellung verdeutlicht, während im Mittelbereich des Kühlkanals 9 ein Teil weggeschnitten ist. Zusätzlich sind zwei Anschlüsse 23 und 24 an entsprechender Stelle über die Länge des Gehäuses 17 des Vormischers 18 verteilt angeordnet. Hier können insbesondere flüssige Rohstoffe, beispielsweise eine Fettmischung in geschmolzenem Zustand, in den Vormischer 16 eingebracht und mit der Masse aus den Randstreifen 11 und 12 homogen vermischt werden. Solche Fettmischungen oder Gemenge erfordern meist eine erhebliche Mischarbeit zu ihrer homogenen Verteilung. Es wird hier gleichsam eine Vormischung geschaffen, die sich dann im Mischer 1 leichter verarbeiten und auch dort mit den übrigen Rohstoffen für die Süßwarenmasse homogen vermischen läßt. Gleichzeitig wird damit ein Teil der erforderlichen Mischarbeit für solche Rohstoffe von dem Mischer 1 in den Vormischer 16 transferiert, so daß z. B. der Mischer 1 mit seinem Gehäuse 2 vergleichsweise kürzer ausgebildet werden kann, als dies im Stand der Technik der Fall ist. Dies kommt wiederum sehr empfindlichen Rohstoffen, beispielsweise aufgeschlagenen Schaummassen, zugute, die nur sehr schonend und kurzzeitig einem Mischvorgang unterzogen werden dürfen, wenn eine Schädigung der Schaummasse vermieden werden soll.

### BEZUGSZEICHENLISTE

- 1 -: Mischer
- 2 -: Gehäuse
- 3 -: Einwurftrichter
- 4 -: Längsachse
- 5 -: Mittelachse
- 6 -: Pfeil
- 7 -: Station
- 8 -: endloser Förderer
- 9 -: Kühltunnel
- 10 -: Längsschneider

- 11 -: Randstreifen
- 12 -: Randstreifen
- 13 -: Querförderer
- 14 -: Längsförderer
- 15 -: Fördereinrichtung
- 16 -: Vormischer
- 17 -: Gehäuse
- 18 -: Achse
- 19 -: Trichter
- 20 -: Station

- 21 -: Spreiztisch
- 22 -: Querschneider
- 23 -: Anschluß
- 24 -: Anschluß

## Patentansprüche

1. Verfahren zum kontinuierlichen Bereitstellen von längs und quer geschnittenen Süßwarenstücken, indem aus Rohstoffen mittels eines Mischers (1) eine Süßwarenmasse gemischt, aus der Süßwarenmasse auf einem endlosen Förderer (8) ein überbreites Süßwarenband ausgeformt, das Süßwarenband durch einen Kühlkanal (9) gefördert und unter Entstehung von Randstreifen (11, 12) längs und quer geschnitten wird, wobei die Randstreifen (11, 12) in den Mischer (1) zurückgefördert und in die Süßwarenmasse eingemischt werden, **dadurch gekennzeichnet, daß** die Randstreifen (11, 12) kontinuierlich in den Mischer (1) zurückgefördert und auch kontinuierlich in die Süßwarenmasse eingemischt werden, und daß die Randstreifen (11, 12) vor der Einmischung in die Süßwarenmasse kontinuierlich aufgeheizt werden.

2. Verfahren nach Anspruch 1, **dadurch gekennzeichnet, daß** die Randstreifen (11, 12) vor der Einmischung in die Süßwarenmasse kontinuierlich vorgemischt werden.

3. Verfahren nach Anspruch 1 oder 2, **dadurch gekennzeichnet, daß** die Randstreifen (11, 12) auf die Temperatur der aus Rohstoffen gemischten Süßwarenmasse aufgeheizt werden.

4. Verfahren nach einem oder mehreren der Ansprüche 1 bis 3, **dadurch gekennzeichnet, daß** mindestens ein Rohstoff mit den zurückgeförderten Randstreifen (11, 12) vorgemischt wird.

5. Vorrichtung zum kontinuierlichen Bereitstellen von längs und quer geschnittenen Süßwarenstücken, mit einem Mischer (1) zum Mischen einer Süßwarenmasse aus Rohstoffen, einer Station (7) zum Ausformen eines überbreiten Süßwarenbandes aus der Süßwarenmasse, einem endlosen Förderer (8) zur Aufnahme des ausgeformten Süßwarenbandes, einem Kühlkanal (9), einem Längsschneider (10) und einem Querschneider (22) zum Zerteilen des Süßwarenbandes unter Entstehung von Randstreifen (11, 12), und einer Fördereinrichtung (15) zum Zurückfördern der Randstreifen (11, 12) in den Mischer (1), **dadurch gekennzeichnet, daß** die Fördereinrichtung (15) zum kontinuierlichen Zurückfördern der Randstreifen (11, 12) in den Mischer (1) ausgebildet ist, und daß eine Aufheizeinrichtung zum kontinuierlichen Aufheizen der Randstreifen (11, 12) vor der Einmischung in die Süßwarenmasse vorgesehen ist.

6. Vorrichtung nach Anspruch 5, **dadurch gekennzeichnet, daß** vor dem Mischer (1) ein Vormischer (16) für die Randstreifen (11, 12) vor deren Einmischung in die Süßwarenmasse vorgesehen ist, der zum Aufheizen und Plastifizieren der zurückgeführten Randstreifen (11, 12) ausgebildet ist.

7. Vorrichtung nach Anspruch 6, **dadurch gekennzeichnet, daß** der Vormischer (16) in der Fördereinrichtung angeordnet und dem Mischer (1) vorgeschaltet ist.

8. Vorrichtung nach Anspruch 6 oder 7, **dadurch gekennzeichnet, daß** die Fördereinrichtung (15) kontinuierlich angetriebene Förderbänder aufweist, die ansteigend zu einer Abwurfstelle über dem Vormischer (16) geführt sind.

9. Vorrichtung nach Anspruch 6, **dadurch gekennzeichnet, daß** der Vormischer (16) einen Anschluß (23) zum Einbringen mindestens eines Rohstoffes der Süßwarenmasse aufweist.

10. Vorrichtung nach Anspruch 5 und 6, **dadurch gekennzeichnet, daß** der Vormischer (16) und der Mischer (1) zu einer integrierten Einheit zusammengefasst sind.

11. Vorrichtung nach Anspruch 5 und 6, **dadurch gekennzeichnet, daß** der Vormischer (16) und der Mischer (1) als getrennt regelbare Aggregate ausgebildet sind.

12. Vorrichtung nach Anspruch 11, **dadurch gekennzeichnet, daß** der Vormischer (16) quer zur Förderrichtung des endlosen Förderers (8) angeordnet und dem Mischer (1) unmittelbar vorgeschaltet ist.

## Claims

1. Method for the continuous processing of confectionery pieces cut for length and breadth by mixing a confectionery mass from raw materials using a mixer (1), forming a confectionery band having a surplus breadth from the confectionery mass using an endless conveyor (8), conveying the confectionery band through a cooling tunnel (9) and cutting the band in longitudinal and transverse direction with origination of offcuts (11, 12), conveying the offcuts (11, 12) back into the mixer (1) and mixing the offcuts with the confectionery mass, **characterized in that** the offcuts (11, 12) are continuously conveyed back into the mixer (1) and continuously mixed with the confectionery mass also, and **in that** the offcuts (11, 12) are continuously heated prior to the mixing with the confectionery mass.

2. Method of claim 1, **characterized in that** the offcuts (11, 12) are continuously premixed prior to mixing with the confectionery mass.

3. Method of claim 1 or 2, **characterized in that** the offcuts (11, 12) are heated to the temperature of the confectionery mass mixed from the raw materials.

4. Method of one or more of the claims 1 to 3, **characterized in that** at least one of the raw materials is premixed with the backwardly conveyed offcuts (11, 12).

5. Apparatus for the continuous processing of confectionery pieces cut for length and breadth, with a mixer (1) for mixing the confectionery mass from raw materials, a station (7) to form a confectionery band having a surplus breadth from the confectionery mass, an endless conveyor (8) to receive the formed confectionery band, a cooling tunnel (9), a longitudinal cutter (10) and a transverse cutter (22) to cut the confectionery band with originating offcuts (11, 12), and a conveying device (15) for backwardly conveying the offcuts (11, 12) into the mixer (1), **characterized in that** the conveying device (15) is designed and arranged to continuous backward convey of the offcuts (11, 12) into the mixer (1), and **in that** a heating device is provided to continuously heat the offcuts (11, 12) prior to the mixing with the confectionery mass.

6. Apparatus of claim 5, **characterized in that** a premixer (16) is provided to premix the offcuts (11, 12) prior to the mixing with the confectionery mass, the premixer being designed and arranged to heat and plastify the backwardly conveyed offcuts (11, 12).

7. Apparatus of claim 6, **characterized in that** premixer (16) is arranged in the conveying device and upstream the mixer (1).

8. Apparatus of claim 6 or 7, **characterized in that** the conveying device (15) comprises continuously driven conveying bands, the conveying bands being arranged in inclined manner with increasing height to a chute point higher than the premixer (16).

9. Apparatus of claim 6, **characterized in that** the premixer (16) includes a connection (23) for feeding at least one of the raw materials of the confectionery mass.

10. Apparatus of claims 5 and 6, **characterized in that** the premixer (16) and the mixer (1) are designed and arranged to form an integral unit.

11. Apparatus of claims 5 and 6, **characterized in that** the premixer (16) and the mixer (1) are designed and arranged to be separately controllable aggregates.

12. Apparatus of claim 11, **characterized in that** the premixer (16) is transversely located with respect to the conveying direction of the endless conveyor (8) and directly arranged upstream the mixer (1).

## Revendications

1. Procédé de préparation en continu de produits de confiserie coupés longitudinalement et transversalement, consistant à mélanger au moyen d'un malaxeur (1) une pâte à confiserie à partir de matières premières, à former dans la pâte à confiserie, sur un transporteur (8) sans fin, une bande de confiserie très large, à transporter la bande de confiserie à travers un conduit de refroidissement (9) et à la couper longitudinalement et transversalement en formant des bandes de bordure (11, 12), les bandes de bordure (11, 12) étant renvoyées dans le malaxeur (1) et mélangées à la pâte à confiserie, **caractérisé en ce que** les bandes de bordure (11, 12) sont renvoyées en continu dans le malaxeur (1) et mélangées également en continu à la pâte à confiserie, et **en ce qu'**avant d'être mélangées à la pâte à confiserie, les bandes de bordure (11, 12) sont chauffées en continu.

2. Procédé selon la revendication 1, **caractérisé en ce qu'**avant d'être mélangées à la pâte à confiserie, les bandes de bordure (11, 12) sont pré-malaxées en continu.

3. Procédé selon la revendication 1 ou 2, **caractérisé en ce que** les bandes de bordure (11, 12) sont chauffées à la température de la pâte à confiserie mélangée à partir des matières premières.

4. Procédé selon une ou plusieurs des revendications 1 à 3, **caractérisé en ce qu'**au moins une matière première est pré-malaxée avec les bandes de bordure (11, 12) renvoyées.

5. Dispositif de préparation en continu de produits de confiserie coupés longitudinalement et transversalement, comportant un malaxeur (1) pour mélanger une pâte à confiserie à partir de matières premières, un poste (7) pour former une bande de confiserie très large à partir de la pâte à confiserie, un transporteur (8) sans fin pour recevoir la bande de confiserie formée, un conduit de refroidissement (9), un coupeur longitudinal (10) et un coupeur transversal (22) pour diviser la bande de confiserie en formant des bandes de bordure (11, 12), et un dispositif de transport (15) pour envoyer les bandes de bordure (11, 12) dans le malaxeur (1), **caractérisé en ce que** le dispositif de transport (15) est conçu pour le renvoi continu des bandes de bordure (11, 12) dans le malaxeur (1), et **en ce qu'**il est prévu un dispositif de chauffage pour chauffer en continu les bandes de bordure (11, 12) avant qu'elles ne soient mélangées à la pâte à confiserie.

6. Dispositif selon la revendication 5, **caractérisé en ce qu'**en amont du malaxeur (1) est prévu un pré-malaxeur (16) pour les bandes de bordure (11, 12) avant que celles-ci ne soient mélangées à la pâte à confiserie, lequel malaxeur est conçu pour chauffer et ramollir les bandes de bordure (11, 12) renvoyées.

7. Dispositif selon la revendication 6, **caractérisé en ce que** le pré-malaxeur (16) est disposé dans le dispositif de transport et en amont du malaxeur (1).

8. Dispositif selon la revendication 6 ou 7, **caractérisé en ce que** le dispositif de transport (15) comporte des tapis de transport entraînés en continu qui sont guidés de manière à monter vers un point d'éjection au-dessus du pré-malaxeur (16).

9. Dispositif selon la revendication 6, **caractérisé en ce que** le pré-malaxeur (16) comporte un raccordement (23) pour introduire au moins une matière première de la pâte à confiserie.

10. Dispositif selon les revendications 5 et 6, **caractérisé en ce que** le pré-malaxeur (16) et le malaxeur (1) sont réunis en une unité intégrée.

11. Dispositif selon les revendications 5 et 6, **caractérisé en ce que** le pré-malaxeur (16) et le malaxeur (1) sont conçus comme des ensembles pouvant être régulés séparément.

12. Dispositif selon la revendication 11, **caractérisé en ce que** le pré-malaxeur (16) est disposé transversalement à la direction de transport du transporteur (8) sans fin, et est monté immédiatement en amont du malaxeur (1).
